# EUROPEAN PATENT SPECIFICATION

(11) **EP 2 695 770 B1**
(45) Date of publication and mention of the grant of the patent: **06.04.2016**
(21) Application number: 13179651.8
(22) Date of filing: 07.08.2013
(51) Int. Cl.: B60P 1/64

(54) **Tired trailer with hooklift body**
Bereifter Anhänger mit Hakenhubkörper
Remorque à pneu avec système de levage à crochet

(30) Priority: 07.08.2012 IT TO20120712
(43) Date of publication of application: 12.02.2014
(73) Proprietor: B.O.B. Sistemi Idraulici S.p.A., Monchiero (IT)
(72) Inventor: Occelli, Roberto, 12060 Monchiero (IT); Taricco, Massimo, 12060 Monchiero (IT)
(74) Representative: Boggio, Luigi

(56) References cited:
- WO-A1-2006/093458
- WO-A2-2010/104459
- GB-A- 2 203 411

## Description

The present invention relates to a tired trailer with hooklift body, in particular to a farming trailer.

To make a trailer with hooklift body, i.e. a trailer provided with a loading body adapted to be arranged on the ground for normal loading/unloading operations and pulled aboard the trailer at the end of the loading/unloading operations, it is known to use a common tired trailer and to superimpose a separate hooklift unit to the chassis of such a trailer.

The hooklift unit, which is normally manufactured by different companies from the ones who make the tired trailer, comprises the body, a supporting and guiding chassis of the body itself superimposed on and, in use, connected in stable manner to the chassis of the trailer, an actuating arm coupled to the supporting chassis and adapted to couple the body, and a slide and support assembly interposed between the supporting chassis and the body.

Normally, the slide and support assembly comprises two longitudinal rows of guide and support blocks, as disclosed, for example, in WO 2010/104459 A2 against which the body slides during the steps of loading and unloading, and through which the load is transferred by means of the suspensions to the trailer chassis, and from here to the ground by means of the trailer wheels.

Although used, the known hooklift trailers of the known type described above are not very reliable and are particularly complex from the construction point of view, in addition to being heavy and expensive.

The above is due in part to the presence of two superimposed chassis, but above all to the fact that the slipping and supporting blocks of the body are arranged in positions which are distanced apart and different from the attachment points of the suspensions.

For this reason, high flexural and torsional stresses are generated in presence of heavy loads (indeed, heavy payloads of up to thirty tons may be loaded on the trailers), fast transfer speeds and in presence of rough road surfaces, which stresses cause permanent deformations, and above all unexpected breakages of the chassis in the areas included between two consecutive axles, which inevitably cause trailer breakdown.

It is the object of the present invention to make a hooklift body, which allows to simply and cost-effectively solve the aforementioned problems.

According to the present invention, a tired trailer with hooklift body is made as claimed in claim 1.

The invention will now be described with reference to the accompanying drawings which illustrate a non-limitative embodiment thereof, in which:
figure 1 shows a lateral elevation view with parts removed for clarity of a preferred embodiment of the tired trailer according to the present invention;
figure 2 shows a plan view with parts removed for clarity of the tired trailer in figure 1;

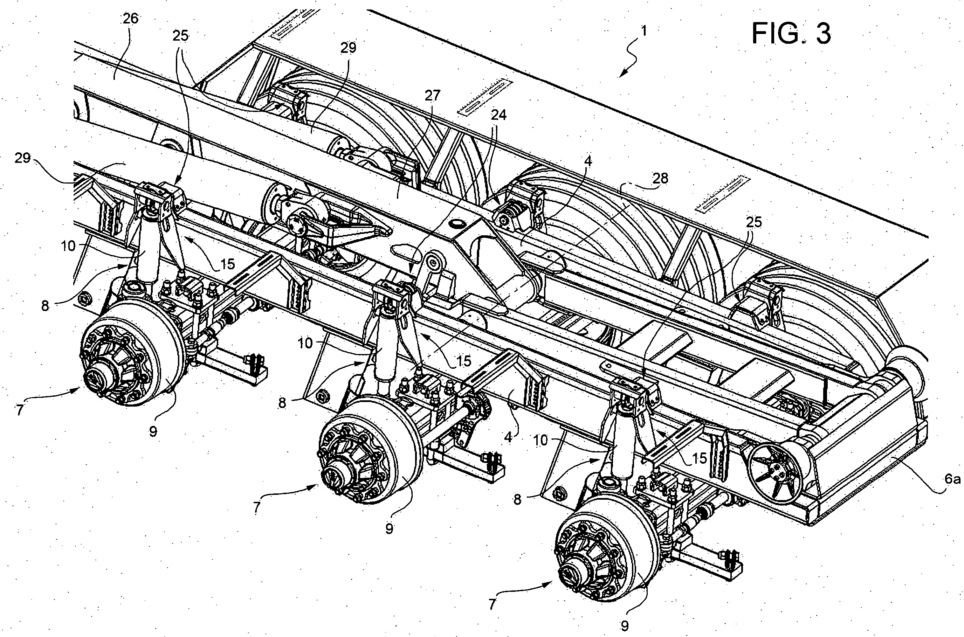

figure 3 is a perspective, enlarged scale view, with parts removed for clarity, of the tired trailer in figure 1 and 2;
figures 4 and 5 are enlarged perspective views of two different details in figure 3; and
figure 6 is a figure similar to figure 5 and shows a variant of the detail in figure 5.

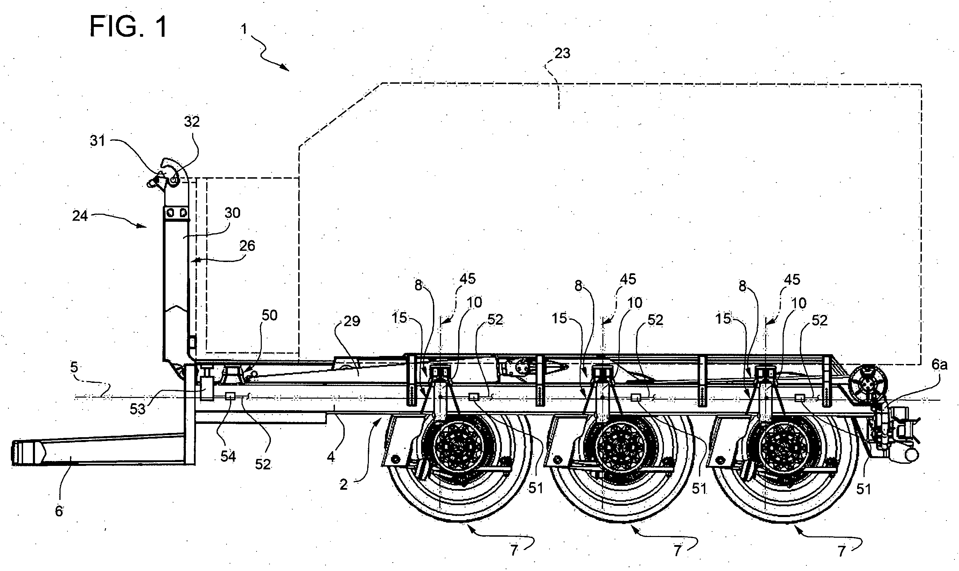

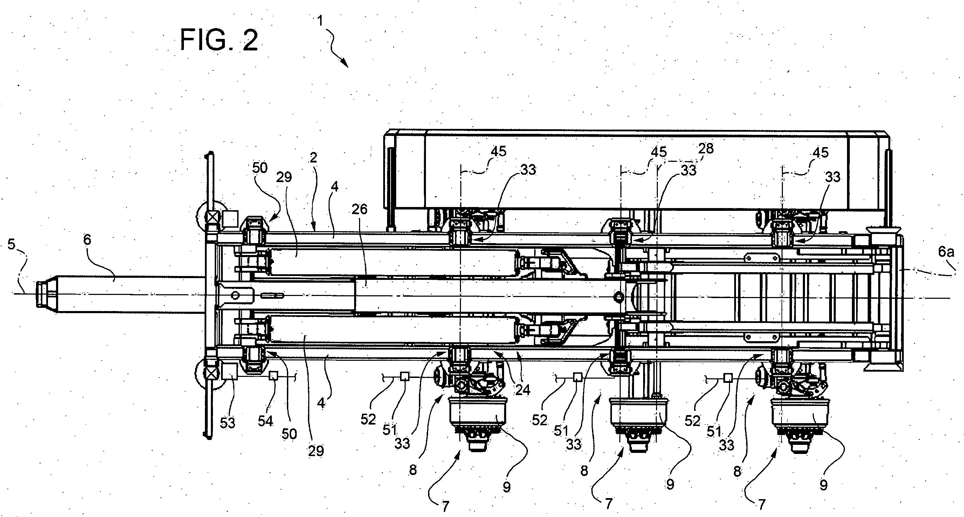

In figures 1 and 2, reference numeral 1 indicates as a whole a tired trailer with hooklift body, in particular, but not exclusively for farming use.

The trailer 1 comprises a chassis 2, in turn comprising two rectilinear longitudinal members 4, which are parallel to each other and to a longitudinal axis 5 of the trailer 1 and transversally spaced from each other, a front attachment bar or rudder 6 to a tractor (not shown) and a rear crossmember 6a connecting opposite terminal segments of the longitudinal members 4 to each other.

The trailer 1 further comprises a plurality of tired axles 7 arranged underneath the longitudinal members 4 and each coupled to the longitudinal members 4 themselves by means of a respective hydraulic suspension 8, known in itself and not described.in detail. For each wheel 9 each suspension 8 comprises a respective, essentially vertical hydraulic cylinder 10 arranged externally to a side of the respective longitudinal member 4 and having, in the particular described example, a longer outlet rod 11 hinged to the respective wheel hub 9 by means of a pin orthogonal to the longitudinal members 4 and an upper liner 12 ending with an eyelet hinged to the respective longitudinal member 4 in an attachment point P.

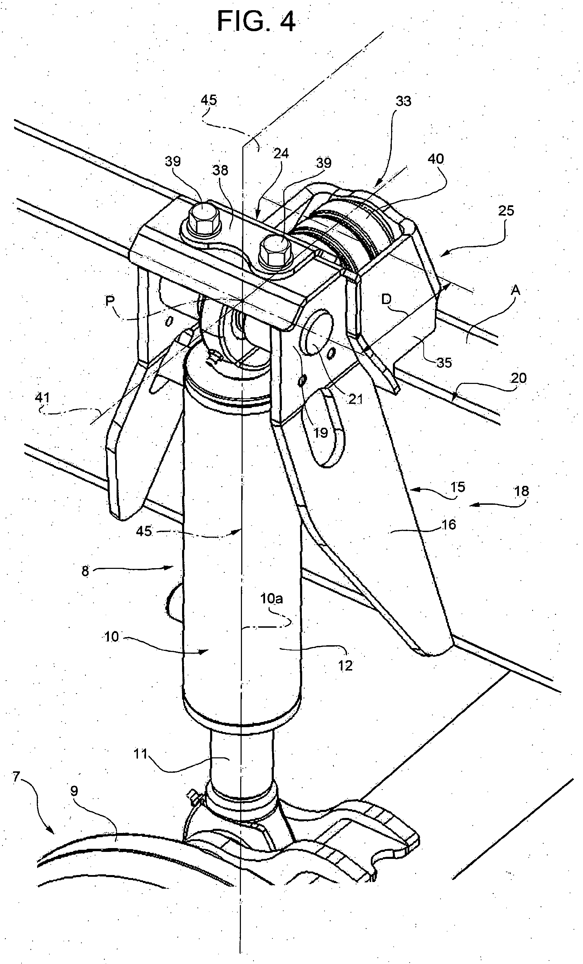

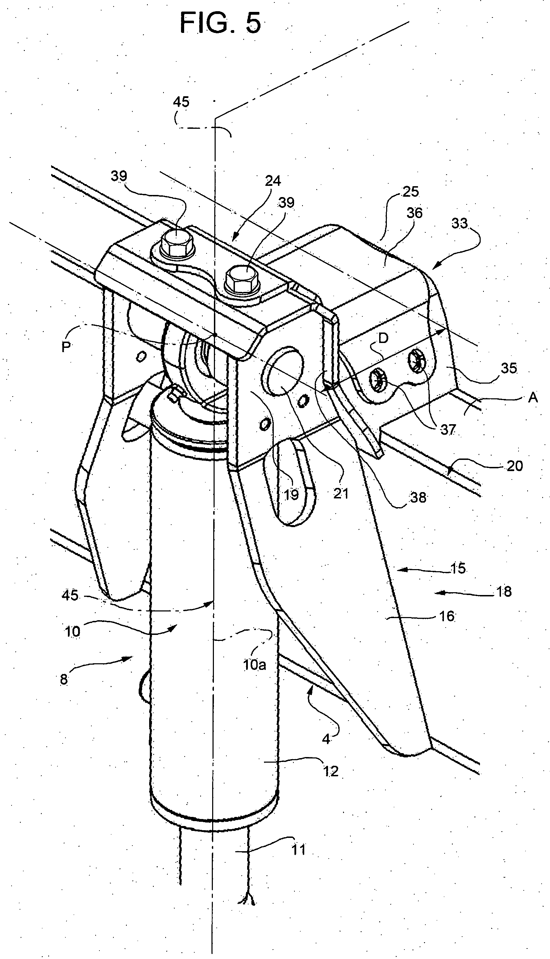

With reference to figures 4 and 5, each hydraulic cylinder 10 is coupled to the respective longitudinal member 4 by means of a respective bracket 15, which comprises a lower portion 16 welded to an external lateral surface 18 of the respective longitudinal member 4 and protruding laterally and overhangingly from the lateral surface 18 itself and an upper attachment portion 19. The upper portion 19 protrudes upwards beyond an upper surface 20 of the respective longitudinal member 4 and carries in hinged manner the respective eyelet in mentioned attachment point P by means of a pin 21 parallel to the longitudinal member 4 itself and to the longitudinal axis 5. Portion 19 is dimensioned so as to maintain the pin 21 as close to the lateral surface 18 of the respective longitudinal member 4 as possible.

Again with reference to figures 1 and 2, the trailer 1 comprises a hooklift body 23 (figure 1), intrinsically known and not described in detail, superimposed on the chassis 2 and a supporting, actuating and guiding device 24 of the body 23 interposed between the longitudinal members 4 and the body 23 itself.

The device 24 comprises, in turn, a supporting and guiding assembly 25 of the body 23 and an articulated actuating arm 26, also intrinsically known and not described in detail, the terminal end 27 of which is arranged between the longitudinal members 4 and hinged directly to the longitudinal members 4 themselves to turn about a hinge axis 28 horizontal to the longitudinal members 4 and to the longitudinal axis 5 under the bias of a pair of hydraulic jacks 29, also intrinsically known and not described in detail.

With reference to figure 1, the arm 26 ends with the front coupling portion 30 to the body 23; in the particular described example, the coupling portion 30 has a slot 31, which is engaged in sliding manner by an attachment pin 32 integral with the body 23 and extends in vertical position when the body 23 is arranged in a transporting position, shown in figure 1, to allow the pin 32 itself to move with respect to the body 23 in vertical direction.

Again with reference to figures 1 and 2 and, in particular, to figures 4 and 5, the supporting and guiding assembly 25 of the body 23 comprises a respective guide and support block 33 for each hydraulic cylinder 10.

Each block 33 is juxtaposed to the respective attachment portion 19 of the bracket 15 in a direction orthogonal to the longitudinal direction and above the surface 20, conveniently with the interposition of a continuous plate A of constant thickness welded to the longitudinal member 4 on the relative surface 20 thereof.

According to a variant (not shown), the blocks 33 are arranged directly in contact with the surface 20.

In the particular example described and illustrated in figure 5, the blocks 33 of the longitudinal end axles 7 each comprises a respective attachment portion 35 welded to the respective upper end portion 19 and to the longitudinal member 4 and an interchangeable supporting portion 36, which is conveniently shaped as an upside-down U, partially covers the portion 35 and is coupled to the respective portion 19 in releasable manner by means of screws 37.

Each block 33 of the end axles 7 then comprises an interchangeable side reference plate portion 38, which is coupled to the supporting portion 36 and partially covers the portion 19, to which it is releasably connected by means of screws 39.

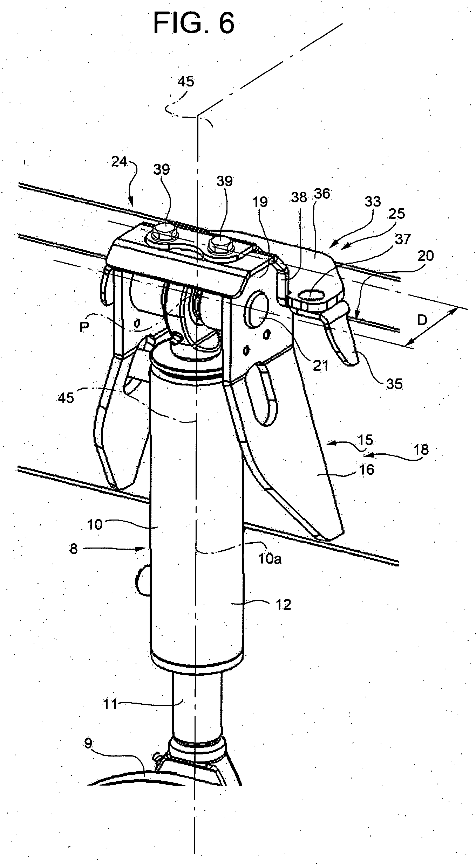

In the variant shown in figure 6, the supporting portion 36 is essentially plate shaped, arranged directly in contact with the surface 20 and screwed onto a lowered portion 35, and then welded to the respective portion 19 and to the respective longitudinal member 4.

Again in the particular described example, with reference to figure 4, the blocks 33 of the intermediate axle 7 (figure 2) differ from the other blocks 33 in that instead of the supporting portion 36 they comprise an idle rolling body 40, conveniently defined by two or more rollers arranged side-by-side, coupled to portion 35 in rotational manner about a transversal axis 41 orthogonal to the longitudinal members 4 and intersecting axis 10a of the respective hydraulic cylinder 10.

The friction component which is generated during the movement of the body 23 with respect to the longitudinal members 4 is reduced in this manner.

Regardless of the construction of the blocks 33, each block 33 defines a supporting zone of the body 23, which is intersected by a respective vertical plane passing through the respective attachment point P of the respective hydraulic cylinder 10 and is orthogonal to longitudinal members 4, the line of which is shown by reference numeral 45 in figures 1 and 2.

In such a configuration, the load transmitted by the body 23 to the single blocks 33 and the reactions of the respective hydraulic cylinders 10 both lay on the respective plane 45 and, thus, the single loads do not generate flexional components on the longitudinal members 4 on the longitudinal plane of the chassis 2.

Furthermore, the distances D between each attachment point and the supporting surface of the respective block 33 are minimal, and therefore so are the torsional torques transmitted to the longitudinal members 4.

For the reasons above, the construction features of the trailer 1 allow, the strength and rigidity of the chassis 2 being equal, to raise the value of the transported load or, the transported load being equal, to increase the value of the maximum speed of the trailer 1. In all cases, the elimination of the flexional torques and the reduction of the torsional torques on the axles allows to obtain particularly reliable trailers.

Again with reference to figures 1 and 2, the trailer 1 further comprises a further front guide and support block 50 arranged in position adjacent to the rudder 6, and conveniently made as the blocks 33, for each longitudinal member 4.

Again with reference to figure 1, the trailer 1 further comprises a respective pressure transducer 51, or other equivalent detection device, arranged on the hydraulic actuating circuit 52 of the hydraulic cylinder 10 itself to detect the load acting on the respective block 33 for each hydraulic cylinder 10.

A hydraulic cylinder 53 connected to the hydraulic circuit 52 and to a respective pressure transducer 54 is then also associated to each of the blocks 50, again to detect the load transmitted to the block 50. In this manner, being the blocks 33 and 50 juxtaposed to a hydraulic cylinder thereof, the weight of the load transported by the body 23 can be immediately determined without needing to take the trailer 1 onto a traditional weighing platform simply by reading the pressure transducers 51 and 54. This is possible as a result of the particular slot coupling between the body 23 and the end portion 30 of the arm 26. Indeed, the slot 31 leaves the body 23 vertically free in the vertical direction when it is arranged in the transporting position thereof.

Finally, from the above it is apparent that the described trailer 1 has a lighter weight to the benefit of transportable load with respect to the known dual chassis solutions. Indeed, in the described trailer 1, both the suspensions 8 of the axles 7 and the actuating arm 26 of the body 23 are connected to the two only longitudinal members 4.

## Claims

1. A tired trailer (1) with hooklift body comprising a chassis (2), in turn comprising two longitudinal members (4) which are parallel to and transversally spaced from each other; a plurality of wheel hubs (7); at least one hydraulic suspension cylinder (10) interposed between each said wheel hub (7) and said chassis and coupled to the chassis (2) in a respective connection point (P); a loading body (23); an operating arm (26) for moving the body (23) with respect to the chassis (2); for each said longitudinal member (4), a respective row of guide and support blocks (33) for said body (23); and, for each said hydraulic cylinder (10), a respective connection bracket (15); each hydraulic cylinder (10) having its own upper portion coupled to said connection bracket (15) in said connection point;
each said guide and support block (33) extending at least partially above an upper surface (20) of the respective said longitudinal member (4);
**characterized in that** it comprises, for each said hydraulic cylinder (10), a corresponding said guide and support block (33); each said guide and support block (33) being crossed by a respective vertical plane orthogonal to the corresponding said longitudinal member (4) and passing through the connection point of the respective said hydraulic cylinder (10); each said bracket (15) carrying a corresponding said guide and support block, which is juxtaposed in a direction orthogonal to said longitudinal direction; each said bracket (15) being integrally connected to an external side of the respective said longitudinal member (4) and comprising an upper end portion (19), which protrudes upwards beyond said upper surface and to which the corresponding said hydraulic cylinder (10) is coupled; each said guide and support block (33) being integrally connected to said upper end portion (19).

2. A trailer according to claim 1, **characterized in that** each said guide and support block comprises a connection portion (16) which is welded to the corresponding said upper end portion and to the corresponding said longitudinal member (4), and at least one interchangeable slipping and supporting portion releasably connected to said connection portion.

3. A trailer according to claim 2, **characterized in that** each said block comprises a lateral guide portion (38) which is interchangeable and releasably coupled to said slipping and supporting portion and to said end portion of the corresponding bracket.

4. A trailer according to the claim 1 or 2, **characterized in that** each said guide and support block further comprises a connection portion which is welded to the corresponding said bracket and to the corresponding said longitudinal member, and at least one rolling body (40) coupled to said connection portion.

5. A trailer according to any one of the preceding claims, **characterized in that** the said arm is directly hinged to the said longitudinal members (4) and at least partially accommodated between the longitudinal members (4).

6. A trailer according to any one of the preceding claims, **characterized in that** it comprises relative mobility means (31,32) interposed between said arm and said body (23) in order to allow said body (23) to move in a vertical direction when the body rests on said guide and support blocks (33) and, for each said hydraulic cylinder (10), pressure transducer means (51) in order to detect the load acting on said slipping and supporting block.

7. A trailer according to any one of the preceding claims, **characterized in that** it further comprises, for each said axle, at least a further support block (50) which is constructionally equal to said guide and support blocks, and for each said further support block, a corresponding hydraulic pressure transducer (54) in order to detect the load transmitted from the body to said further support block.

## Patentansprüche

1. Bereifter Anhänger (1) Hakenhubkörper, der umfasst: ein Chassis bzw. Untergestell (2), das wiederum zwei Längselemente (4) umfasst, die parallel zueinander und quer voneinander beabstandet sind; eine Vielzahl von Radnaben (7); wenigstens einen hydraulischen Aufhängungszylinder (10), der zwischen jeder Radnabe (7) und dem Untergestell eingefügt ist und an einem jeweiligen Verbindungspunkt (P) mit dem Untergestell (2) gekoppelt ist; einen Ladekörper (23); einen Betätigungsarm (26) zum Bewegen des Körpers (23) in Bezug auf das Untergestell (2); für jedes genannte Längselement (4) eine jeweilige Reihe von Führungs- und Halteblöcken (33) für den Körper (23); und für jeden hydraulischen Zylinder (10) eine jeweilige Verbindungshalterung (15);
wobei jeder hydraulische Zylinder (10) seinen eigenen oberen Abschnitt hat, der an dem Verbindungspunkt mit der Verbindungshalterung (15) gekoppelt ist;
wobei jeder Führungs- und Halterungsblock (33) sich wenigstens teilweise über einer oberen Oberfläche (20) des jeweiligen Längselements (4) erstreckt;
**dadurch gekennzeichnet, dass** er für jeden hydraulischen Zylinder einen entsprechenden Führungs- und Halteblock (33) umfasst; wobei jeder Führungs- und Halteblock (33) von einer jeweiligen vertikalen Ebene orthogonal zu dem entsprechenden Längselement (4) geschnitten wird und durch den Verbindungspunkt des jeweiligen hydraulischen Zylinder (10) geht; wobei jede Halterung (15) einen entsprechenden Führungs- und Halteblock trägt, der in einer Richtung orthogonal zu der Längsrichtung daneben gestellt ist; wobei jede Halterung (15) integral mit einer Außenseite des jeweiligen Längselements (4) verbunden ist und einen oberen Endabschnitt (19) umfasst, der über die obere Oberfläche hinaus nach oben vorsteht und mit dem der entsprechende hydraulisch Zylinder (10) gekoppelt ist, wobei jeder Führungs- und Halteblock (33) integral mit dem oberen Endeabschnitt (19) verbunden ist.

2. Anhänger nach Anspruch 1, **dadurch gekennzeichnet, dass** jeder Führungs- und Halteblock (33) einen Verbindungsabschnitt (16) umfasst, der an den entsprechenden oberen Endabschnitt und an das entsprechende Längselement (4) geschweißt ist, und wenigstens ein austauschbarer Gleit- und Halteabschnitt lösbar mit dem Verbindungsabschnitt verbunden ist.

3. Anhänger nach Anspruch 2, **dadurch gekennzeichnet, dass** jeder genannte Block einen seitlichen Führungsblock (38) umfasst, der austauschbar und lösbar mit dem Gleit- und Halteabschnitt und mit dem Endabschnitt der entsprechenden Halterung gekoppelt ist.

4. Anhänger nach Anspruch 1 oder 2, **dadurch gekennzeichnet, dass** jeder Führungs- und Halteblock ferner einen Verbindungsabschnitt, der an die entsprechende Halterung und an das entsprechende Längselement geschweißt ist, und wenigstens einen Rollkörper (40), der mit dem Verbindungsabschnitt gekoppelt ist, umfasst.

5. Anhänger nach einem der vorhergehenden Ansprüche, **dadurch gekennzeichnet, dass** der Arm direkt an dem Längselement (4) eingehängt ist und wenigstens teilweise zwischen den Längselementen (4) aufgenommen ist.

6. Anhänger nach einem der vorhergehenden Ansprüche, **dadurch gekennzeichnet, dass** er jeweilige Mobilitätmittel (31, 32), die zwischen dem Arm und dem Körper (23) eingefügt sind, um zuzulassen, dass der Körper (23) sich in eine Vertikalrichtung bewegt, wenn der Körper auf den Führungs- und Halteblöcken (33) ruht, und für jeden hydraulischen Zylinder (10) Druckwandlermittel (51) umfasst, um die Last, die auf den Gleit- und Halteblock wirkt, zu erfassen.

7. Anhänger nach einem der vorangehenden Ansprüche, **dadurch gekennzeichnet, dass** er für jede genannte Achse wenigstens einen weiteren Halteblock (50), der den Führungs- und Halteblöcken konstruktiv gleichwertig ist, und für jeden weiteren Halteblock einen entsprechenden hydraulischen Druckwandler (54) umfasst, um die von dem Körper auf den weiteren Halteblock übertragene Last zu erfassen.

## Revendications

1. Remorque à pneu (1) avec un corps de levage à crochet comprenant un châssis (2), comprenant à son tour deux éléments longitudinaux (4) qui sont parallèles et espacés transversalement l'un de l'autre ; une pluralité de moyeux de roue (7) ; au moins un cylindre de suspension hydraulique (10) interposé entre chaque dit moyeu de roue (7) et ledit châssis, et couplé au châssis (2) dans un point de liaison respectif (P) ; un corps de chargement (23) ; un bras fonctionnel (26) pour le déplacement du corps (23) par rapport au châssis (2) ; pour chaque dit élément longitudinal (4), une rangée respective de blocs de guidage et de support (33) pour ledit corps (23) ; et pour chaque dit cylindre hydraulique (10), un support de liaison respectif (15) ;
chaque cylindre hydraulique (10) présentant sa propre partie supérieure couplée audit support de liaison (15) dans ledit point de liaison ;
chaque dit bloc de guidage et de support (33) s'étendant au moins en partie au-dessus d'une surface supérieure (20) dudit élément longitudinal respectif (4) ;
**caractérisée en ce qu'**elle comprend pour chaque dit cylindre hydraulique (10), un dit bloc de guidage et de support correspondant (33) ; chaque dit bloc de guidage et de support (33) étant traversé par un plan vertical respectif orthogonal audit élément longitudinal correspondant (4) et passant par le point de liaison dudit cylindre hydraulique respectif (10) ; chaque dit support (15) portant un dit bloc de guidage et de support correspondant qui est juxtaposé dans une direction orthogonale à ladite direction longitudinale ; chaque dit support (15) étant intégralement relié à un côté externe dudit élément longitudinal respectif (4) et comprenant une partie d'extrémité supérieure (19) qui fait saillie vers le haut au-delà de ladite surface supérieure et à laquelle ledit cylindre hydraulique correspondant (10) est couplé ; chaque dit bloc de guidage et de support (33) étant intégralement relié à ladite partie d'extrémité supérieure (19).

2. Remorque selon la revendication 1, **caractérisée en ce que** chaque dit bloc de guidage et de support comprend une partie de liaison (16) qui est soudée à ladite partie d'extrémité supérieure correspondante et audit élément longitudinal correspondant (4) et au moins une partie de glissement et de support interchangeable reliée de manière détachable à ladite partie de liaison.

3. Remorque selon la revendication 2, **caractérisée en ce que** chaque dit bloc comprend une partie de guidage latérale (38) qui est interchangeable et couplée de manière détachable à ladite partie de glissement et de support et à ladite partie d'extrémité du support correspondant.

4. Remorque selon la revendication 1 ou 2, **caractérisée en ce que** chaque dit bloc de guidage et de support comprend en outre une partie de liaison qui est soudée audit support correspondant et audit élément longitudinal correspondant et au moins un corps de roulement (40) couplé à ladite partie de liaison.

5. Remorque selon l'une quelconque des revendications précédentes, **caractérisée en ce que** ledit bras est directement articulé auxdits bras longitudinaux (4) et au moins en partie logé entre les éléments longitudinaux (4).

6. Remorque selon l'une quelconque des revendications précédentes, **caractérisée en ce qu'**elle comprend des moyens de mobilité relative (31, 32) interposés entre ledit bras et ledit corps (23) afin de permettre audit corps (23) de se déplacer dans une direction verticale lorsque le corps repose sur lesdits blocs de guidage et de support (33) et pour chaque dit cylindre hydraulique (10), des moyens capteurs de pression (51) afin de détecter la charge agissant sur ledit bloc de glissement et de support.

7. Remorque selon l'une quelconque des revendications précédentes, **caractérisée en ce qu'**elle comprend en outre pour chaque dit essieu au moins un autre bloc de support (50) qui présente une construction égale à celle desdits blocs de guidage et de support et pour chaque dit autre bloc de support un capteur de pression hydraulique correspondant (54) afin de détecter la charge transmise du corps audit autre bloc de support.
